# EUROPEAN PATENT APPLICATION

(11) **EP 4 475 413 A1**
(43) Date of publication of application: **11.12.2024**
(21) Application number: 24181235.3
(22) Date of filing: 10.06.2024
(51) Int. Cl.: H02M 1/12, H02M 7/00, H01F 27/38, H01F 37/00, H02M 1/00, H02J 3/01

(54) **ELECTROMAGNETIC RECTIFICATION APPARATUS AND METHOD FOR ATTENUATING HARMONICS FROM A NEUTRAL IN AN AC CIRCUIT**

(30) Priority: 09.06.2023 US 202363507168 P
(71) Applicant: Bilancio LLC, St. Petersburg, FL 33704 (US)
(72) Inventor: FERREE, Kevin J., La Mesa (US); SELLA, Patrick, St. Petersburg (US)
(74) Representative: Keltie LLP

(57) **Abstract**

A rectification apparatus is provided for reducing harmonics in an electrical system. The rectification apparatus includes a housing, a first filter disposed within the housing that is electrically connected to a first phase source of a three-phase AC power circuit, a second filter disposed within the housing that is electrically connected to a second phase source of the three-phase AC power circuit, and a third filter disposed within the housing that is electrically connected to third phase source of the three-phase AC power circuit.

## Description

### CROSS-REFERENCE TO RELATED APPLICATION

This application claims the benefit under 35 U.S.C. §119(e) of U.S. Provisional Patent Application Serial No. 63/507,168, filed June 9, 2023, the disclosure of which is hereby incorporated herein in its entirety by this reference.

### BACKGROUND

In electrical systems employing alternating current, three phase power is commonplace due to several advantages three phase power enables. Three phase power provides three phases, each 120° apart, cycled to enable constant torque and constant power. Further, the three phases can theoretically be run along a neutral to deconstructively interfere and cancel each other out without the need of returning power to the generator to reroute or ground.

However, during daily usage of appliances connecting in circuit to draw loads from the electrical system, thereby impacting the phased power supplied, harmonic distortions frequently arise. Odd order harmonics do not fully add to zero when the three phases are interfered. Instead, odd order harmonics constructively resonate between the phases leading to an oscillating current borne to the neutral. Typically, Delta connections are used to cycle the current around the connection instead of combining into the neutral wire of a Wye connection. However, total harmonic distortion ("THD") nonetheless arises in domestic and commercial circuits, reducing efficiency and decreasing performance and life of electronics suffering harmonic distortion through their circuitry.

Single phase power is likewise subject to harmonic distortion as appliances connecting to the circuit draw power to set up oscillations in at last parts of the general circuit feeding the appliances. Some of these oscillations interfere constructively with the phased power creating harmonics on the neutral.

What is needed is an alternating current neutral and ground inductive electromagnetic rectification unit devised to establish a magnetic field that attenuates and cancels out harmonic distortion off the neutral to restore phase and polarity to the current and thereby increase efficiency, power factor output, and lifespan of connected electronics operating from the circuit.

### DISCLOSURE

According to some examples of the disclosure, a rectification apparatus is provided for reducing harmonics in an electrical system. The rectification apparatus includes a housing, a first filter disposed within the housing that is electrically connected to a first phase source of a three-phase AC power circuit, a second filter disposed within the housing that is electrically connected to a second phase source of the three-phase AC power circuit, and a third filter disposed within the housing that is electrically connected to third phase source of the three-phase AC power circuit.

According to some examples of the disclosure, a rectification apparatus for reducing oscillations produced along a neutral due to the emergence of harmonics is provided. The rectification apparatus includes a pair of first filters electrically connected to one another via a first header wire. The pair of first filters is electrically connected to a neutral. The apparatus also includes a pair of second filters electrically connected to one another via a second header wire. The pair of second filters is electrically connected to a ground. The apparatus also includes a pair of capacitors each connected to the neutral and the ground.

According to examples of the disclosure, a method for attenuating harmonics from a neutral of a three-phase alternating current ("AC") circuit is provided. The method includes connecting a first filter to a first phase source of a the three-phase AC circuit, connecting a second filter to second phase source of the three-phase AC circuit, and connecting a third filter to a third phase source of the three-phase AC circuit.

### BRIEF DESCRIPTION OF THE DRAWINGS

For a detailed understanding of the disclosure, reference should be made to the following detailed description, taken in conjunction with the accompanying drawings, in which like elements have generally been designated with like numerals.
FIG. 1 is a schematic view of a rectification apparatus according to one example of the disclosure.
FIG. 2 is a schematic view of a rectification apparatus according to one example of the disclosure.
FIG. 3 is a schematic view of a rectification apparatus according to one example of the disclosure.
FIG. 4 is a schematic view of a rectification apparatus according to one example of the disclosure.
FIG. 5 is a schematic view of a rectification apparatus according to one example of the disclosure.
FIG. 6 is a schematic view of a rectification apparatus according to one example of the disclosure.
FIG. 7 is a schematic view of a rectification apparatus according to one example of the disclosure.
FIG. 8 is a schematic view of a rectification apparatus according to one example of the disclosure.
FIG. 9 is a schematic view of a rectification apparatus according to one example of the disclosure.

### MODE(S) FOR CARRYING OUT THE INVENTION

The illustrations presented herein are not actual views of any rectification apparatus, or any component thereof, but are merely idealized representations, which are employed to describe embodiments of the invention.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, any relational term, such as "first," "second," "top," "bottom," "upper," "lower," "above," "beneath," "side," "upward," "downward," etc., is used for clarity and convenience in understanding the disclosure and accompanying drawings, and does not connote or depend on any specific preference or order, except where the context clearly indicates otherwise. For example, these terms may refer to an orientation of elements of any rectification apparatus when utilized in a conventional manner. Furthermore, these terms may refer to an orientation of elements of any rectification apparatus as illustrated in the drawings.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

The present disclosure provides for the reduction or elimination of odd order harmonics by interference with a magnetic field. An example of such an apparatus is described in U.S. Patent Application No. 11,424,069, issued on August 23, 2022, incorporated herein in its entirety. The present disclosure may be used in addition to or in place of the electromagnetic rectification apparatus described in U.S. Patent Application No. 11,424,069. In the examples of the present disclosure, filters, such as inductors, including bifilar coil conductors, and/or capacitors may be used to filter odd order harmonics arising while a load is applied to a source, such as an alternating current ("AC") source including a three-phase AC source. Without being bound by any particular theory, magnetic fields established by the apparatus reduce distortion along alternating current three-phase circuits of any voltage. The alternating phase to phase and phase to ground/neutral unit is installable by connection directly to phase to phase and phase to ground/neutral of an electrical panel, such as a residential or commercial electrical panel.

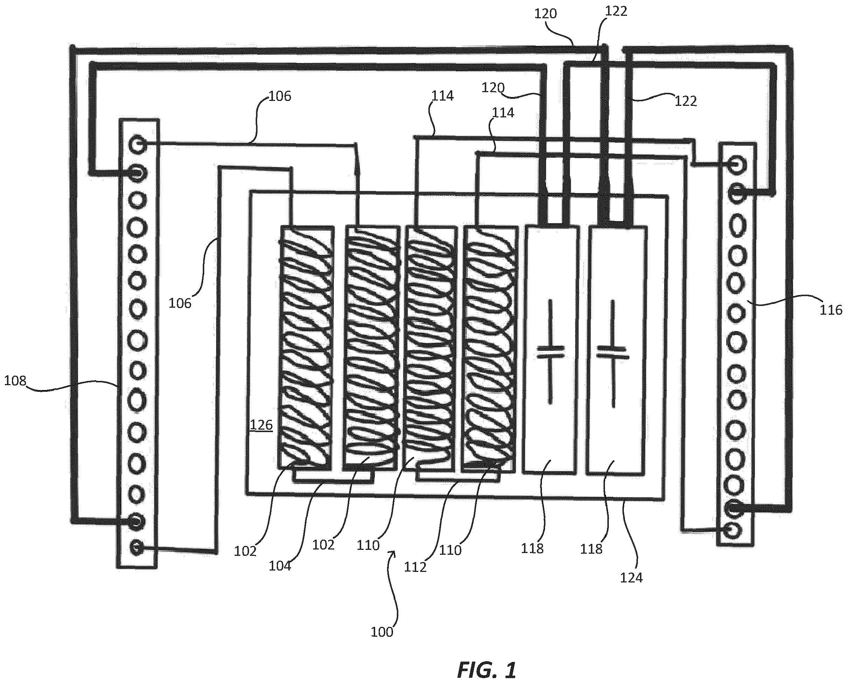

FIG. 1 shows a schematic view of a rectification apparatus for filtering odd order harmonics in an electrical system. As shown in FIG. 1, a rectification apparatus 100 may comprise a pair of first filters 102 connected by a head wire 104. The pair of first filters 102 may include inductive coils that are connected in parallel via the head wire 104 to a neutral 108 via tail wires 106. However, this is not intended to be limiting and other filtering devices may be used such as one or more capacitors. The rectification apparatus 100 may further include a pair of second filters 110 connected by a head wire 112. The second filters 110 may be similar to the first filters 102 and may be connected in parallel via the head wire 112 to a ground 116 via tail wires 114.

The pair of first filters 102 and the pair of second filters 110 connected to the neutral 108 and ground 116, respectively, may be similar to the electromagnetic rectification unit described in U.S. 11,424,069. In addition to the pair of first filters 102 and the pair of second filters 110, a pair of capacitors 118 may be provided. The capacitors 118 may each have a first tail wire 120 that is connected to the neutral 108 and a second tail wire 122 that is connected to the ground 116. The pair of capacitors 118 may provide additional filtering of odd order harmonics to provide further energy savings and efficiency to the rectification apparatus 100.

The rectification apparatus 100 may further comprise a housing 124. The housing 124 may be configured to be installed in or near an existing residential or commercial electrical panel. The housing 124 may comprise an insulating matrix 126 that surrounds each of the pair of first filters 102, second filters 110, and capacitors 118.

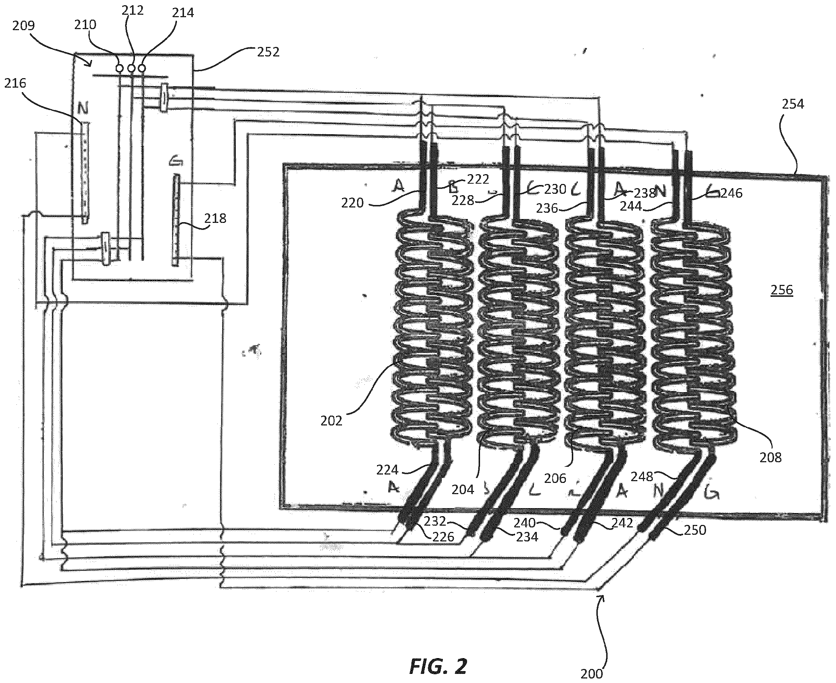

FIG. 2 shows a schematic view of a rectification apparatus for filtering odd order harmonics in an electrical system. As shown in FIG. 2, a rectification apparatus 200 may comprise a first filter 202, a second filter 204, a third filter 206, and a fourth filter 208. The first filter 202, as well as the other filters described herein, may comprise bifilar coils as shown, or may comprise another type of AC filter, including other inductors, capacitors, or other components. The filters may be configured to electrically connect to a three-phase AC power circuit 209, a neutral 216, and a ground 218 of an electrical system.

The first filter 202 may comprise a first terminal 220, a second terminal 222, a third terminal 224, and a fourth terminal 226. The first terminal 220 and the third terminal 224 may be electrically connected to a first phase source 210 of a three-phase AC power circuit 209. The second terminal 222 and the fourth terminal 226 may be electrically connected to a second phase source 212 of the three-phase AC power circuit 209.

The second filter 204 may comprise a first terminal 228, a second terminal 230, a third terminal 232, and a fourth terminal 234. The first terminal 228 and third terminal 232 may be electrically connected to the second phase source 212 of the three-phase AC power circuit 209. The second terminal 230 and the fourth terminal 234 may be electrically connected to a third phase source 214 of the three-phase AC power circuit 209.

The third filter 206 may comprise a first terminal 236, a second terminal 238, a third terminal 240, and a fourth terminal 242. The first terminal 236 and the third terminal 240 may be electrically connected to the third phase source 214 of the three-phase AC power circuit 209. The second terminal 238 and the fourth terminal 242 may be electrically connected to the first phase source 210 of the three-phase AC power circuit 209.

The fourth filter 208 may comprise a first terminal 244, a second terminal 246, a third terminal 248, and a fourth terminal 250. The first terminal 244 and the third terminal 248 may be electrically connected to the neutral 216. The second terminal 246 and the fourth terminal 250 may be electrically connected to the ground 218.

The rectification apparatus 200 may further comprise a housing 254. In some examples, the rectification apparatus 200 may also comprise an insulating matrix 256 within the housing 254 to surround the first, second, third, and fourth filters 202, 204, 206, 208. The insulating matrix may be introduced as a liquid and may set as an insulating, nonconductive gel or solid surrounding the first, second, third, and fourth filters 202, 204, 206, 208. In some examples, the housing 254 may be installed separate from an electrical panel 252 as shown in FIG. 2. In other examples, the housing 254 may be installed within the electrical panel 252. Once installed as shown in FIG. 2, the rectification apparatus 200 may reduce harmonics and restore polarity and phase to the current from the three-phase AC power circuit 209.

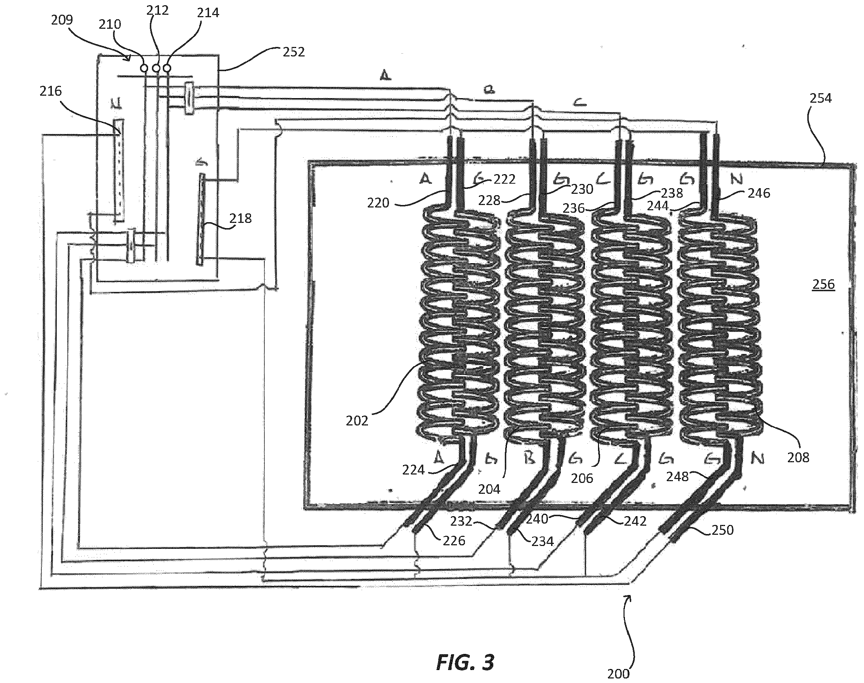

The rectification apparatus 200 may be connected to the electrical system in other ways while still successfully reducing harmonics in the electrical system. FIG. 3 schematically shows the rectification apparatus 200 connected to the electrical system, including the three-phase AC power circuit 209, the neutral 216, and ground 218. In FIG. 3, the first terminal 220 and the third terminal 224 of the first filter 202 may be electrically connected to the first phase source 210 of the three-phase AC power circuit 209. The first terminal 228 and the third terminal 232 of the second filter 204 may be electrically connected to the second phase source 212 of the three-phase AC power circuit 209. The first terminal 236 and the third terminal 240 of the third filter 206 may be electrically connected to the third phase source 214 of the three-phase AC power circuit 209. The second and fourth terminals 222, 226 of the first filter 202, the second and fourth terminals 230, 234 of the second filter 204, and the second and fourth terminals 238, 242 of the third filter 206 are each connected to the ground 218. The first and third terminals 244, 248 of the fourth filter 208 are connected to the ground 218 and the second and fourth terminals 246, 250 of the fourth filter 208 are connected to the neutral 216. Once installed as shown in FIG. 3, the rectification apparatus 200 may reduce harmonics and restore polarity and phase to the current from the three-phase AC power circuit 209.

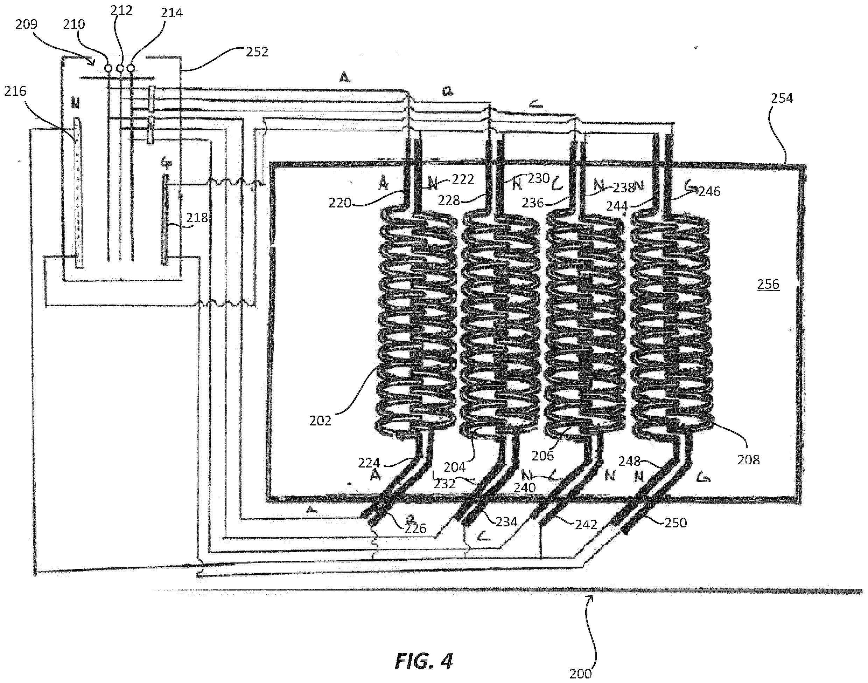

FIG. 4 schematically shows the rectification apparatus 200 connected to the electrical system, including the three-phase AC power circuit 209, the neutral 216, and ground 218 in another arrangement. In FIG. 4, the first and third terminals 220, 224 of the first filter 202 may be electrically connected to the first phase source 210 of the three-phase AC power circuit 209. The first and third terminals 228, 232 of the second filter 204 may be electrically connected to the second phase source 212 of the three-phase AC power circuit 209. The first and third terminals 236, 240 of the third filter 206 may be electrically connected to the third phase source 214 of the three-phase AC power circuit 209. The second and fourth terminals 222, 226 of the first filter 202, the second and fourth terminals 230, 234 of the second filter 204, and the second and fourth terminals 238, 242 of the third filter 206 are each connected to the neutral 216. The first and third terminals 244, 248 of the fourth filter 208 are connected to the neutral 216 and the second and fourth terminals 246, 250 of the fourth filter 208 are connected to the ground 218. Once installed as shown in FIG. 4, the rectification apparatus 200 may reduce harmonics and restore polarity and phase to the current from the three-phase AC power circuit 209.

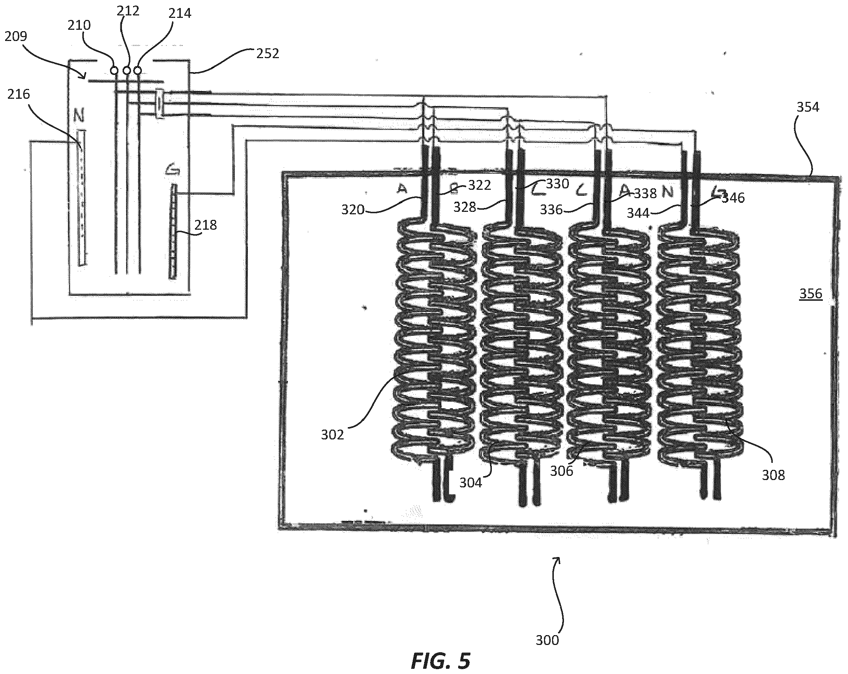

FIG. 5 schematically shows a rectification apparatus 300 connected to an electrical system, including the three-phase AC power circuit 209, the neutral 216, and ground 218. The rectification apparatus 300 is similar to the rectification apparatus 200, except that the filters in the rectification apparatus 300 each comprise two terminals instead of four. For example, the rectification apparatus comprises a first filter 302, a second filter 304, a third filter 306, and a fourth filter 308. The first filter 302 may comprise a first terminal 320 and a second terminal 322. The second filter 304 may comprise a first terminal 328 and a second terminal 330. The third filter 306 may comprise a first terminal 344 and a second terminal 346. The fourth filter 308 may comprise a first terminal 344 and a second terminal 346.

The first terminal 320 of the first filter 302 is electrically connected to the first phase source 210 of the three-phase AC power circuit 209, and the second terminal 322 of the first filter 302 is electrically connected to the second phase source 212 of the three-phase AC power circuit 209. The first terminal 328 of the second filter 304 is electrically connected to the second phase source 212 of the three-phase AC power circuit 209, and the second terminal 330 of the second filter 304 is electrically connected to the third phase source 214 of the three-phase AC power circuit 209. The first terminal 336 of the third filter 306 is electrically connected to the third phase source 214 of the three-phase AC power circuit 209, and the second terminal 338 is electrically connected to the first phase source 210 of the three-phase AC power circuit 209. The first terminal 344 of the fourth filter 308 is electrically connected to the neutral 216, and the second terminal 346 of the fourth filter 308 is electrically connected to the ground 218. The rectification apparatus may comprise a housing 354. The filters may be disposed in the housing and may be insulated from one another via an insulating matrix 356. The housing 354 may be installed separately from the electrical panel 252 as shown, or may be installed within the electrical panel 252. Once installed as shown in FIG. 5, the rectification apparatus 300 may reduce harmonics and restore polarity and phase to the current from the three-phase AC power circuit 209.

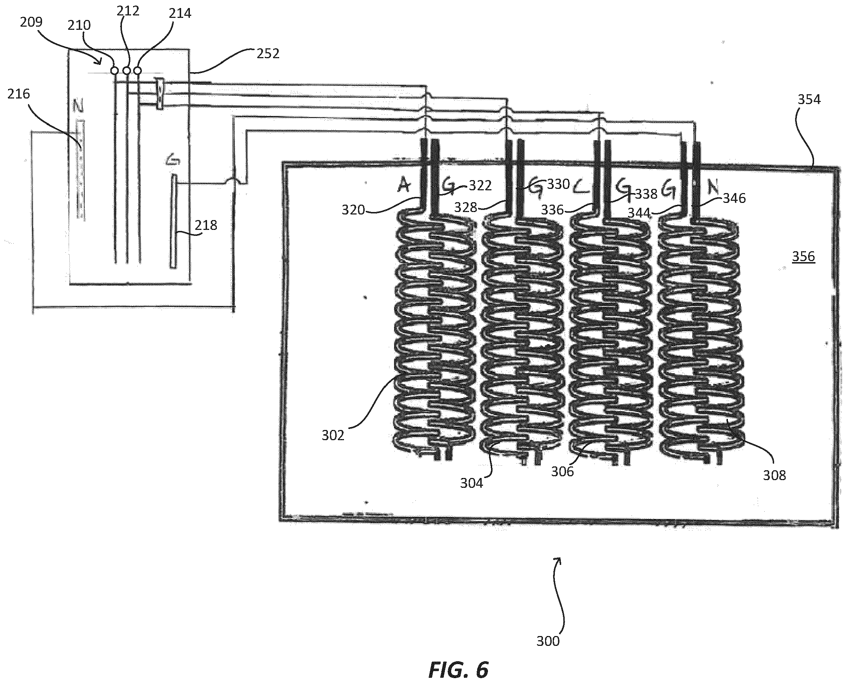

The rectification apparatus 300 may be connected to the electrical system in other ways while still successfully reducing harmonics in the electrical system. FIG. 6 schematically shows the rectification apparatus 300 connected to the electrical system, including the three-phase AC power circuit 209, the neutral 216, and ground 218. In FIG. 6, the first terminal 320 of the first filter 302 is electrically connected to the first phase source 210 of the three-phase AC power circuit 209, the first terminal 328 of the second filter 304 is electrically connected to the second phase source 212 of the three-phase AC power circuit 209, and the first terminal 336 of the third filter 306 is electrically connected to the third phase source 214 of the three-phase AC power circuit 209. The second terminal 322 of the first filter 302, the second terminal 330 of the second filter 304, and the second terminal 338 of the third filter 306 are each connected to the neutral 216. The first terminal 344 of the fourth filter 308 is electrically connected to the neutral 216 and the second terminal 346 of the fourth filter 308 is electrically connected to the ground 218. Once installed as shown in FIG. 6, the rectification apparatus 300 may reduce harmonics and restore polarity and phase to the current from the three-phase AC power circuit 209.

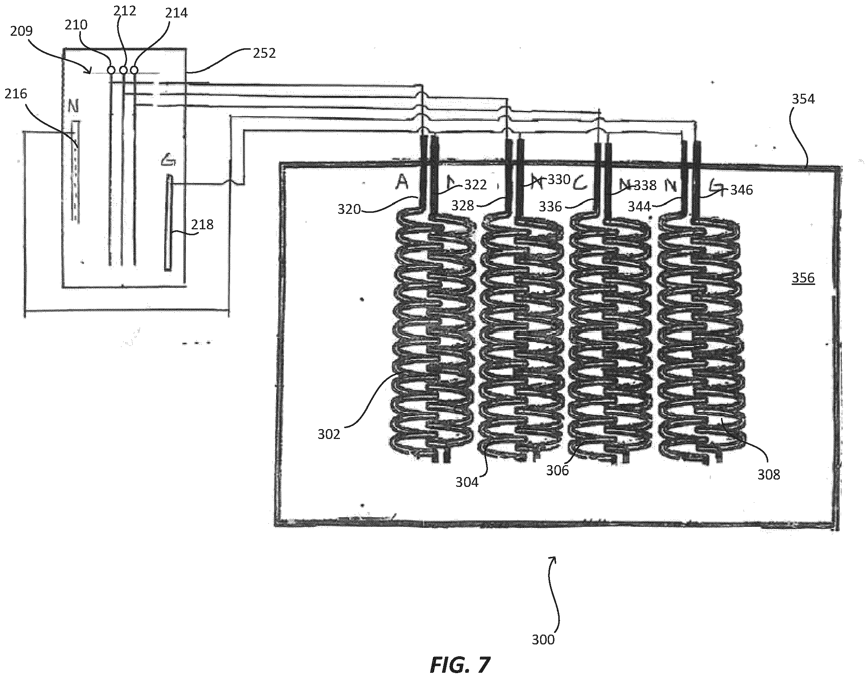

FIG. 7 schematically shows a rectification apparatus 300 connected to an electrical system, including the three-phase AC power circuit 209, the neutral 216, and ground 218 in another arrangement. The configuration shown in FIG. 7 is similar to that of FIG. 6 except that the second terminals 322, 330, 338 of the first, second, and third filters 302, 304, 306, are electrically connected to the neutral 216 instead of the ground 218. The first terminal 344 of the fourth filter 308 is electrically connected to neutral 216, and the second terminal 346 of the fourth filter 308 is electrically connected to the ground 218. Once installed as shown in FIG. 7, the rectification apparatus 300 may reduce harmonics and restore polarity and phase to the current from the three-phase AC power circuit 209.

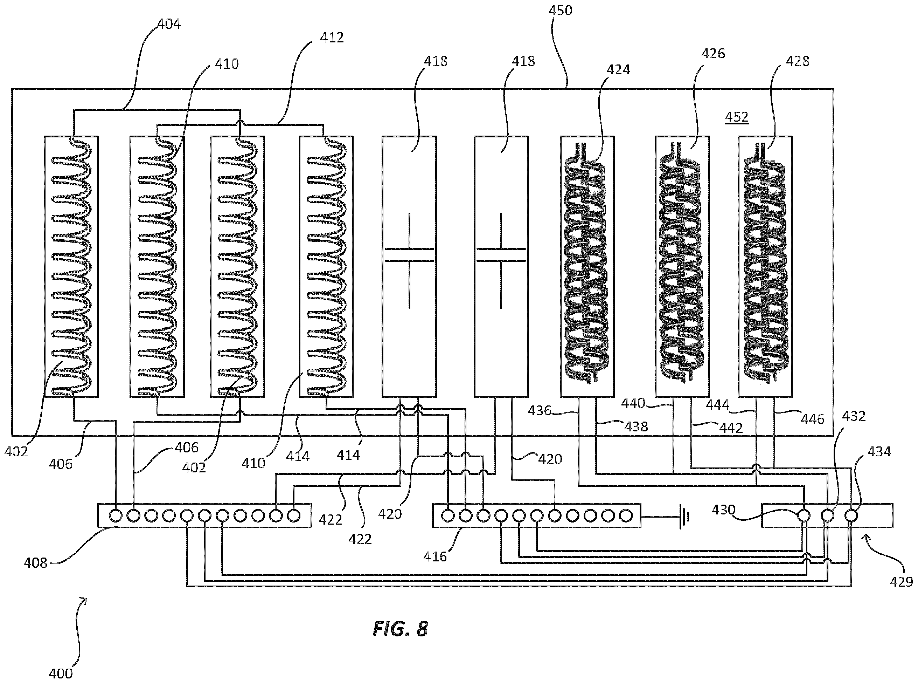

In some examples, aspects of the above described rectification apparatuses 100, 200, 300 may be combined. An example of such a rectification apparatus is shown in FIG. 8. In FIG. 8, a rectification apparatus 400 comprises a pair of first filters 402 electrically connected via a head wire 404. The pair of first filters 402 are connected in parallel to a neutral 408 via tail wires 406. The rectification apparatus 400 further comprises a pair of second filters 410 electrically connected via a head wire 412. The pair of second filters 410 are connected in parallel to a ground 416 via tail wires 414. The pair of first filters 402 and the pair of second filters 410 may be similar to the rectification apparatus described in U.S. Patent Application No. 11,424,069.

The rectification apparatus 400 may also include a pair of capacitors 418. The capacitors 418 may each have a first tail wire 420 that is connected to the neutral 408 and a second tail wire 422 that is connected to the ground 416. The combination of the pair of first filters 402, the pair of second filters 410, and the pair of capacitors 418 may be similar to the rectification apparatus 100 described above.

The rectification apparatus 400 may further include a fifth filter 424, a sixth filter 426, and a seventh filter 428. Similar to the rectification apparatuses 200, 300 discussed above, the fifth, sixth, and seventh filters 424, 426, 428 may electrically connect to a three-phase AC power circuit 429. In this example, a first terminal 436 of the fifth filter 424 may be electrically connected to a first phase source 430 of the three-phase AC power circuit 429 and a second terminal 438 may be electrically connected to a second phase source 432 of the three-phase AC power circuit 429. The first terminal 440 of the sixth filter 426 may be electrically connected to the second phase source 432 of the three-phase AC power circuit 429 and the second terminal 442 may be electrically connected to a third phase source 434 of the three-phase AC power circuit 429. The first terminal 444 of the seventh filter 428 may be electrically connected to the third phase source 434 of the three-phase AC power circuit 429 and the second terminal 446 of the seventh filter 428 may be electrically connected to the first phase source 430 of the three-phase AC power circuit 429.

Other configurations of the rectification apparatus 400 are also possible. Such modifications of the configuration of the rectification apparatus may be similar to those discussed above with reference to the rectification apparatuses 200, 300 discussed above. For example, the fifth, sixth, and seventh filters 424, 426, 428 may comprise four terminals instead of two. The fifth, sixth, and seventh filters 424, 426, 428 may also each connect to one of the first, second, or third phase sources 430, 432, 434 and one of the neutral 408 or ground 416.

The rectification apparatus may comprise a housing 450 that is operable to house the filters. The housing may comprise an insulating matrix 452. In some examples, each of the filters may be in a single housing 450 as shown. In other examples, some of the filters may be installed outside of the housing 450 or in a separate housing. Once installed as shown in FIG. 8, the rectification apparatus 400 may reduce harmonics and restore polarity and phase to the current from the three-phase AC power circuit 429.

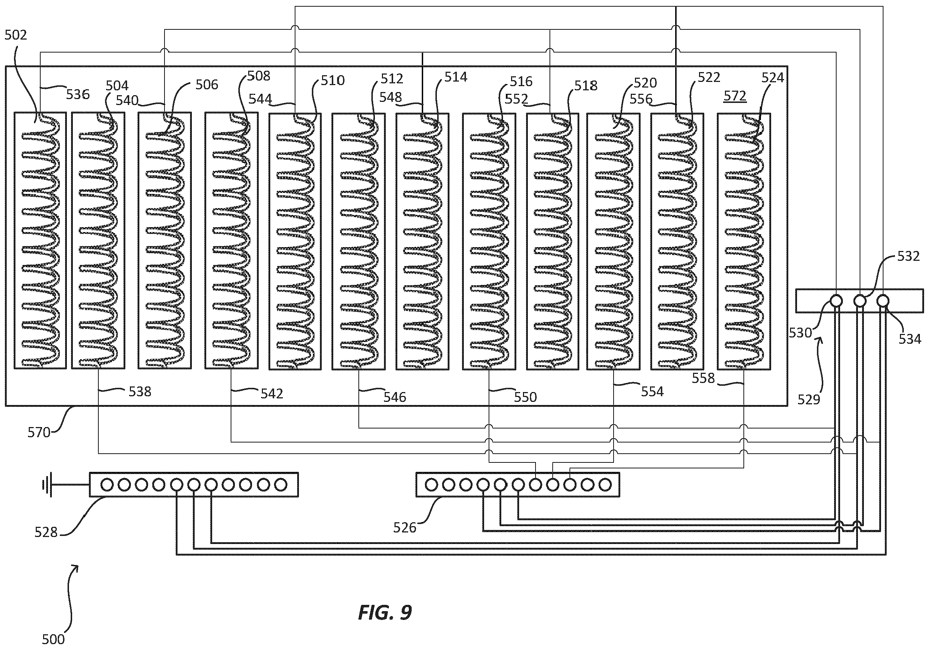

FIG. 9 shows a schematic view of another example of a rectification apparatus. In FIG. 9, a rectification apparatus 500 comprises twelve filters, e.g., a first filter 502, second filter 504, third filter 506, fourth filter 508, fifth filter 510, sixth filter 512, seventh filter 514, eighth filter 516, ninth filter 518, tenth filter 520, eleventh filter 522, and twelfth filter 524. Each of the filters may be an induction type filter, though other types of electrical filters may be used depending on frequencies of harmonics to be attenuated. Each of the filters may be connected to one of a neutral 526 or to the three-phase AC power circuit 529.

In this example, a terminal 536 of the first filter 502 is electrically connected to a first phase source 530 of the three-phase AC power circuit 529. A terminal 538 of the second filter 504 is electrically connected to a second phase source 532 of the three-phase AC power circuit 529. A terminal 540 of the third filter 506 is electrically connected to the second phase source 532 of the three-phase AC power circuit 529. A terminal 542 of the fourth filter 508 is electrically connected to a third phase source 534 of the three-phase AC power circuit 529. A terminal 544 of the fifth filter 510 is electrically connected to the third phase source 534 of the three-phase AC power circuit 529. A terminal 546 of the sixth filter 512 is electrically connected to the first phase source 530 of the three-phase AC power circuit 529. A terminal 548 of the seventh filter 514 is electrically connected to the first phase source 530 of the three-phase AC power circuit 529. A terminal 550 of the eighth filter 516 is electrically connected to the neutral 526. A terminal 552 of the ninth filter 518 is electrically connected to the second phase source 532 of the three-phase AC power circuit 529. A terminal 554 of the tenth filter 520 is electrically connected to the neutral 526. A terminal 556 of the eleventh filter 522 is electrically connected to the third phase source 534 of the three-phase AC power circuit 529. A terminal 558 of the twelfth filter 524 is electrically connected to the neutral 526.

The rectification apparatus 500 may comprise a housing 570 in which the filters are disposed. In some examples, the rectification apparatus 500 may comprise an insulating matrix 572. In some examples, one or more of the filters may also be connected to a ground 528, or additional filters may be provided that are connected to the ground 528. Once installed as shown in FIG. 9, the rectification apparatus 500 may reduce harmonics and restore polarity and phase to the current from the three-phase AC power circuit 529.

In the above-described examples, the disclosure can reduce and filter odd and even order and low and high frequency harmonic waves and dissipate such harmonic waves out of electrical systems. The examples can be installed at any type of electrical system, including residential and commercial electrical systems.

In some applications, the examples disclosed herein can act as a surge protective /Surge suppression device. For example, one or more of the filters described herein may comprise coils that may include 10-8000 turns. The coils may be configured as a single coil or as bifilar or trifilar coils. In some examples, the filters including coils may comprise 32 gauge copper to #8 + copper. The rectification apparatus may be configured, to be compatible with 4-wire and 3-wire, 120/240volt, 120/208volt, 277/480volt, 3 phase A,B,C or single phase to neutral/ground protection/suppression. Surge protection provided by the rectification apparatus may be disposed at a service entry distribution panel to provide primary surge protection. In other examples, the rectification apparatus may provide secondary or localized surge protection/suppression. It can be at each load center throughout the electrical system mode of protection. The rectification apparatus may comprise the following characteristics:
- a frequency of 50/60 hertz;
- Single phase - ground, Single phase to neutral; and
- 3 Phase A,B,C -Ground - 3 Phase A,B,C - Neutral.

Surge capacity, nominal discharge current, and SCCR can be configured based on a given application. The Device installation can be in parallel or in series, pass through phases and neutrals/grounds, or open circuit design.

Further expressions of the inventive concept are set out in the following clauses:
1. A rectification apparatus for reducing harmonics in an electrical system, the rectification apparatus comprising:
   a housing;
   a first filter disposed within the housing, the first filter being electrically connected to a first phase source of a three-phase AC power circuit;
   a second filter disposed within the housing, the second filter being electrically connected to a second phase source of the three-phase AC power circuit; and
   a third filter disposed within the housing, the third filter being electrically connected to third phase source of the three-phase AC power circuit.
2. The rectification apparatus of clause 1, further comprising a fourth filter disposed within the housing, the fourth filter being electrically connected to a neutral or a ground.
3. The rectification apparatus of clause 2, wherein
   the first filter is electrically connected to the second phase source of the three-phase AC power circuit,
   the second filter is electrically connected to the third phase source of the three-phase AC power circuit, and
   the third filter is electrically connected to the first phase source of the three-phase AC power circuit.
4. The rectification apparatus of clause 3, wherein
   the first filter comprises a first terminal and a second terminal, the first terminal of the first filter being connected to the first phase source and the second terminal of the first filter being connected to the second phase source;
   the second filter comprises a first terminal and a second terminal, the first terminal of the second filter being connected to the second phase source and the second terminal of the second filter being connected to the third phase source; and
   the third filter comprises a first terminal and a second terminal, the first terminal of the third filter being connected to the third phase source and the second terminal of the third filter being connected to the first phase source.
5. The rectification apparatus of clause 4, wherein
   the first filter comprises a third terminal and a fourth terminal, the third terminal of the first filter being connected to the first phase source and the fourth terminal of the first filter being connected to the second phase source;
   the second filter comprises a third terminal and a fourth terminal, the third terminal of the second filter being connected to the second phase source and the fourth terminal of the second filter being connected to the third phase source; and
   the third filter comprises a third terminal and a fourth terminal, the third terminal of the third filter being connected to the third phase source and the fourth terminal of the third filter being connected to the first phase source.
6. The rectification apparatus of clause 2, wherein the first, second, and third filters are electrically connected to the ground.
7. The rectification apparatus of clause 6, wherein
   the first filter comprises a first terminal and a second terminal, the first terminal of the first filter being connected to the first phase source and the second terminal of the first filter being connected to the ground;
   the second filter comprises a first terminal and a second terminal, the first terminal of the second filter being connected to the second phase source and the second terminal of the second filter being connected to the ground; and
   the third filter comprises a first terminal and a second terminal, the first terminal of the third filter being connected to the third phase source and the second terminal of the third filter being connected to the ground.
8. The rectification apparatus of clause 7, wherein
   the first filter comprises a third terminal and a fourth terminal, the third terminal of the first filter being connected to the first phase source and the fourth terminal of the first filter being connected to the ground;
   the second filter comprises a third terminal and a fourth terminal, the third terminal of the second filter being connected to the second phase source and the fourth terminal of the second filter being connected to the ground; and
   the third filter comprises a third terminal and a fourth terminal, the third terminal of the third filter being connected to the third phase source and the fourth terminal of the third filter being connected to the ground.
9. The rectification apparatus of clause 2, wherein the first, second, and third filters are electrically connected to the neutral.
10. The rectification apparatus of clause 9, wherein
   the first filter comprises a first terminal and a second terminal, the first terminal of the first filter being connected to the first phase source and the second terminal of the first filter being connected to the neutral;
   the second filter comprises a first terminal and a second terminal, the first terminal of the second filter being connected to the second phase source and the second terminal of the second filter being connected to the neutral; and
   the third filter comprises a first terminal and a second terminal, the first terminal of the third filter being connected to the third phase source and the second terminal of the third filter being connected to the neutral.
11. The rectification apparatus of clause 10, wherein
   the first filter comprises a third terminal and a fourth terminal, the third terminal of the first filter being connected to the first phase source and the fourth terminal of the first filter being connected to the neutral;
   the second filter comprises a third terminal and a fourth terminal, the third terminal of the second filter being connected to the second phase source and the fourth terminal of the second filter being connected to the neutral; and
   the third filter comprises a third terminal and a fourth terminal, the third terminal of the third filter being connected to the third phase source and the fourth terminal of the third filter being connected to the neutral.
12. The rectification apparatus of clause 1, further comprising:
   a pair of fourth filters connected in parallel to one another and connected to a neutral; and
   a pair of fifth filters connected in parallel to one another and connected to a ground.
13. The rectification apparatus of clause 12, further comprising a pair of capacitors wherein each of the capacitors is connected to the ground and to the neutral.
14. The rectification apparatus of clause 1, wherein each of the first filter, the second filter, and the third filter comprises a capacitor or an inductor, the inductor including inductive coils configured as a single coil, bifilar coils, or trifilar coils.
15. A rectification apparatus for reducing oscillations produced along a neutral due to the emergence of harmonics, the rectification apparatus comprising:
   a pair of first filters electrically connected to one another via a first header wire, the pair of first filters electrically connected to a neutral;
   a pair of second filters electrically connected to one another via a second header wire, the pair of second filters electrically connected to a ground; and
   a pair of capacitors each connected to the neutral and the ground.
16. The rectification apparatus of clause 15, further comprising:
   a third filter electrically connected to a first phase source of a three-phase AC power circuit;
   a fourth filter electrically connected to a second phase source of the three-phase AC power circuit; and
   a fifth filter electrically connected to third phase source of the three-phase AC power circuit.
17. The rectification apparatus of clause 16, wherein each of the first filters, the second filters, the third filter, the fourth filter, and the fifth filter comprises a capacitor or an inductor, the inductor including inductive coils configured as a single coil, bifilar coils, or trifilar coils.
18. A method for attenuating harmonics from a neutral of a three-phase alternating current ("AC") circuit, the method comprising:
   connecting a first filter to a first phase source of the three-phase AC circuit;
   connecting a second filter to second phase source of the three-phase AC circuit; and
   connecting a third filter to a third phase source of the three-phase AC circuit.
19. The method of clause 18, further comprising:
   connecting the first filter to the second phase source;
   connecting the second filter to the third phase source; and
   connecting the third filter to the first phase source.
20. The method of clause 18, further comprising connecting each of the first filter, the second filter, and the third filter to a neutral or to a ground.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The embodiments of the disclosure described above and illustrated in the accompanying drawings do not limit the scope of the disclosure, which is encompassed by the scope of the appended claims and their legal equivalents. Any equivalent embodiments are within the scope of this disclosure. Indeed, various modifications of the disclosure, in addition to those shown and described herein, such as alternate useful combinations of the elements described, will become apparent to those skilled in the art from the description. Such modifications and embodiments also fall within the scope of the appended claims and equivalents.

## Claims

1. A rectification apparatus for reducing harmonics in an electrical system, the rectification apparatus comprising:
a housing;
a first filter disposed within the housing, the first filter being electrically connected to a first phase source of a three-phase AC power circuit;
a second filter disposed within the housing, the second filter being electrically connected to a second phase source of the three-phase AC power circuit; and
a third filter disposed within the housing, the third filter being electrically connected to third phase source of the three-phase AC power circuit.

2. The rectification apparatus of claim 1, further comprising a fourth filter disposed within the housing, the fourth filter being electrically connected to a neutral or a ground.

3. The rectification apparatus of claim 1 or claim 2, wherein
the first filter is electrically connected to the second phase source of the three-phase AC power circuit,
the second filter is electrically connected to the third phase source of the three-phase AC power circuit, and
the third filter is electrically connected to the first phase source of the three-phase AC power circuit.

4. The rectification apparatus of any of claims 1 to 3, wherein
the first filter comprises a first terminal and a second terminal, the first terminal of the first filter being connected to the first phase source and the second terminal of the first filter being connected to the second phase source;
the second filter comprises a first terminal and a second terminal, the first terminal of the second filter being connected to the second phase source and the second terminal of the second filter being connected to the third phase source; and
the third filter comprises a first terminal and a second terminal, the first terminal of the third filter being connected to the third phase source and the second terminal of the third filter being connected to the first phase source.

5. The rectification apparatus of claim 4, wherein
the first filter comprises a third terminal and a fourth terminal, the third terminal of the first filter being connected to the first phase source and the fourth terminal of the first filter being connected to the second phase source;
the second filter comprises a third terminal and a fourth terminal, the third terminal of the second filter being connected to the second phase source and the fourth terminal of the second filter being connected to the third phase source; and
the third filter comprises a third terminal and a fourth terminal, the third terminal of the third filter being connected to the third phase source and the fourth terminal of the third filter being connected to the first phase source.

6. The rectification apparatus of claim 1 or claim 2, wherein (a) the first, second, and third filters are electrically connected to the ground; or (b) the first, second, and third filters are electrically connected to the neutral.

7. The rectification apparatus of claim 6(a), wherein
the first filter comprises a first terminal and a second terminal, the first terminal of the first filter being connected to the first phase source and the second terminal of the first filter being connected to the ground;
the second filter comprises a first terminal and a second terminal, the first terminal of the second filter being connected to the second phase source and the second terminal of the second filter being connected to the ground; and
the third filter comprises a first terminal and a second terminal, the first terminal of the third filter being connected to the third phase source and the second terminal of the third filter being connected to the ground.

8. The rectification apparatus of claim 7, wherein
the first filter comprises a third terminal and a fourth terminal, the third terminal of the first filter being connected to the first phase source and the fourth terminal of the first filter being connected to the ground;
the second filter comprises a third terminal and a fourth terminal, the third terminal of the second filter being connected to the second phase source and the fourth terminal of the second filter being connected to the ground; and
the third filter comprises a third terminal and a fourth terminal, the third terminal of the third filter being connected to the third phase source and the fourth terminal of the third filter being connected to the ground.

9. The rectification apparatus of claim 6(b), wherein
the first filter comprises a first terminal and a second terminal, the first terminal of the first filter being connected to the first phase source and the second terminal of the first filter being connected to the neutral;
the second filter comprises a first terminal and a second terminal, the first terminal of the second filter being connected to the second phase source and the second terminal of the second filter being connected to the neutral; and
the third filter comprises a first terminal and a second terminal, the first terminal of the third filter being connected to the third phase source and the second terminal of the third filter being connected to the neutral.

10. The rectification apparatus of claim 9, wherein
the first filter comprises a third terminal and a fourth terminal, the third terminal of the first filter being connected to the first phase source and the fourth terminal of the first filter being connected to the neutral;
the second filter comprises a third terminal and a fourth terminal, the third terminal of the second filter being connected to the second phase source and the fourth terminal of the second filter being connected to the neutral; and
the third filter comprises a third terminal and a fourth terminal, the third terminal of the third filter being connected to the third phase source and the fourth terminal of the third filter being connected to the neutral.

11. The rectification apparatus of claim 1, further comprising:
a pair of fourth filters connected in parallel to one another and connected to a neutral; and a pair of fifth filters connected in parallel to one another and connected to a ground;
optionally further comprising a pair of capacitors wherein each of the capacitors is connected to the ground and to the neutral.

12. The rectification apparatus of any of claims 1 to 11, wherein each of the first filter, the second filter, and the third filter comprises a capacitor or an inductor, the inductor including inductive coils configured as a single coil, bifilar coils, or trifilar coils.

13. A rectification apparatus for reducing oscillations produced along a neutral due to the emergence of harmonics, the rectification apparatus comprising:
a pair of first filters electrically connected to one another via a first header wire, the pair of first filters electrically connected to a neutral;
a pair of second filters electrically connected to one another via a second header wire, the pair of second filters electrically connected to a ground; and
a pair of capacitors each connected to the neutral and the ground.

14. The rectification apparatus of claim 13, further comprising:
a third filter electrically connected to a first phase source of a three-phase AC power circuit;
a fourth filter electrically connected to a second phase source of the three-phase AC power
circuit; and
a fifth filter electrically connected to third phase source of the three-phase AC power circuit; optionally
wherein each of the first filters, the second filters, the third filter, the fourth filter, and the fifth filter comprises a capacitor or an inductor, the inductor including inductive coils configured as a single coil, bifilar coils, or trifilar coils.

15. A method for attenuating harmonics from a neutral of a three-phase alternating current ("AC") circuit, the method comprising:
connecting a first filter to a first phase source of the three-phase AC circuit;
connecting a second filter to second phase source of the three-phase AC circuit; and connecting a third filter to a third phase source of the three-phase AC circuit;
optionally further comprising:
connecting the first filter to the second phase source;
connecting the second filter to the third phase source; and
connecting the third filter to the first phase source; or further comprising connecting each of the first filter, the second filter, and the third filter to a neutral or to a ground.
